# EUROPEAN PATENT SPECIFICATION

(11) **EP 0 337 759 B1**
(45) Date of publication and mention of the grant of the patent: **06.07.1994**
(21) Application number: 89303613.7
(22) Date of filing: 12.04.1989
(51) Int. Cl.: A61C 8/00

(54) **Dental implants with bone resorption preventing means**
Zahnimplantate mit Mitteln zum Verhindern der Knochenresorption
Implants dentaires avec des moyens pour éviter la résorption de l'os

(30) Priority: 12.04.1988 US 180466
(43) Date of publication of application: 18.10.1989
(73) Proprietor: HADACO, Ltd., Tortola (VG)
(72) Inventor: Homsy, Charles A., Houston Texas 77024 (US)
(74) Representative: Wasmeier, Alfons, Dipl.-Ing.

(56) References cited:
- EP-A- 0 015 599
- FR-A- 2 600 523

## Description

The invention relates, in general, to dental implants of the type which include a shaft for insertion into the mandible and/or maxilla. The shaft is inserted into a precisely drilled socket. New bone will grow up and then interface and adapt to the titanium shaft, and especially to dental implants according to the features of the introductory part of claim 1.

The latest dental implants have shafts which receive a hydroxylapatite coating that permits bone to actually bond thereto. These shafts are generally cylindrical in shape and have various lengths, typically from 7 mm to 18 mm, to accommodate individual anatomy.

The dentist or oral surgeon can select from different dental implant systems as alternatives to fixed or removable prosthetics for use in the edentulous or partially edentulous mandible and maxilla. He can also choose from endosseious implants which become biointegrated or osseointegrated, including those which rely on an accurate press-fit to become established between an uncoated implant shaft and surrounding bone, and those which rely on tissue ingrowth into a porous coating on the shaft's outer surface. A postoperative mechanical bond is formed between living bone and the coated surface. This bond is known as biointegration. The coating can also be designed to form a postoperative, mechanical, biochemical bond with living bone. This bond is known as osseointegration.

The present invention has utility for uncoated dental implants, for dental implants whose shafts receive hard surface porosities, as well as those that receive soft surface porosities, and combinations thereof. Each such implant has an elongated shaft.

In use and in response to loads, the proximal shaft portion distributes stresses to the shaft's tip longitudinally in the form of compressive stresses, and to proximal bone in the form of lateral stresses. Distal shaft portion and/or its tip transfer corresponding stresses and strains to the apposite distal bone, which may respond to the received stresses by densifying its bone structure, and especially under the shaft's tip.

The bone resorption problem is described in EP-A- 15599 and in FR-A- 26 00 523.

EP-A- 15599 discloses a shaft or core 1 having an outer component 3 whose modulus of elasticity is similar to that of bone, and an intermediate component 4 having a modulus of elasticity much lower (1/5) or less than bone and that of the outer component 3 (page 7, lines 10 - 27, page 8, lines 1 -3, and page 10, lines 22 - 25). The outer component 3 is made of a high molecular weight polymer, graphite, pyrolytic carbon or bioglass (page 12, lines 2 - 5). The material should be porous to permit bone ingrowth therein and have a modulus of elasticity in the range of about 0,5 to 2 time that of bone (page 16, lines 1 - 11).

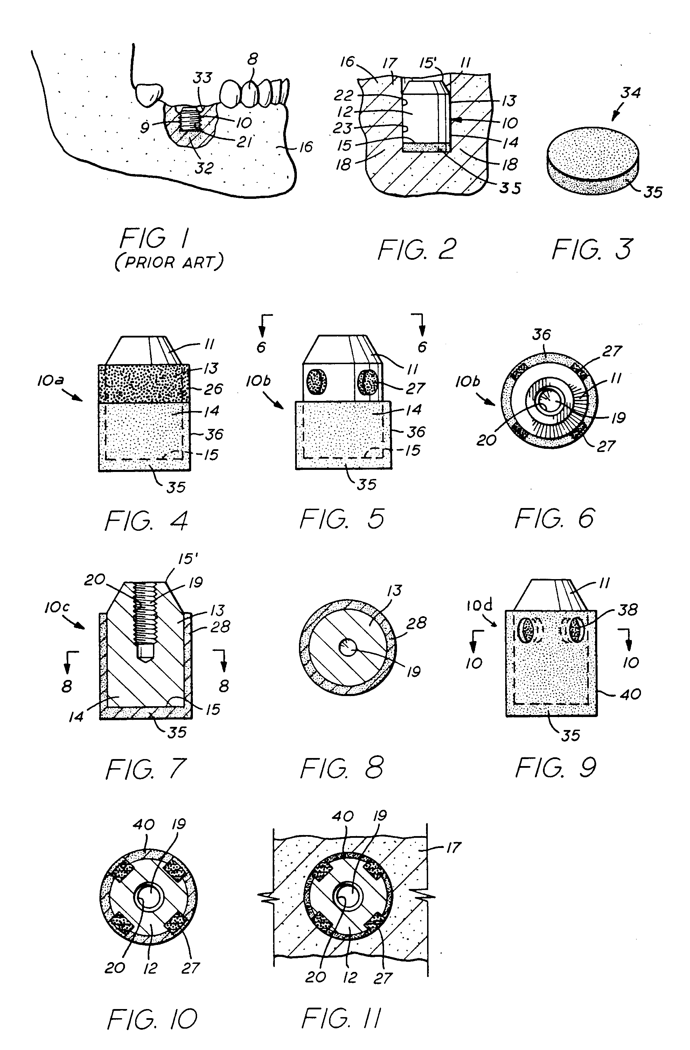

From FR-A- 26 00 523 an energy absorbing sleeve can be derived (page 2, lines 17 - 38), which comprises an upper convex part 1 with a bore 2 within a cylinder 3, whose bottom 4 is convex (Fig. 1 and page 4). The sleeve 3 is made of a non-porous DELRIN (a registered trademark) elastic material which has a low permeability to gases and does not absorb water. The convexity of elastic bottom 4 assists in elastically absorbing and then elastically transferring received loads to appositional bone (page 3, lines 20 - 23, lines 26 - 29, page 5, lines 29 - 31). The bottom 4 returns to its original shape when the forces cease (page 6, lines 1 -4).

The various prior attempts at using hard porosities and elastic plastic materials in apposition to bone have not been entirely satisfactory, because they fail to substantially eliminate or attenuate the transfer of cyclic stresses from the distal shaft's tip to apposite bone and therefore they tend to further accelerate the bone resorption process, which is unavoidably accomponied by proximal bone resorption, implant instability, great discomfort, and severe pain, because the jaw bone under the shaft's tip will increasingly shunt load from proximal bone to distal bone in the region apposite to the shaft's tip, and will lead to proximal bone resorption, which tends to reduce proximal bone's resistance to implant swaying. This tendency further accelerates the bone resorption process, which is unavoidably accompanied by implant instability, great discomfort, and severe pain.

It is an object of the invention to substantially eliminate or attenuate the transfer of cyclic stresses from the distal shaft's tip to apposite bone.

The dental implant according to this invention is characterised by the features of the characterising part of claim 1. Further embodiments of the invention are the subject of subclaims.

A dental implant is provided for insertion into a preformed socket within the mandible or maxilla and has a shaft defining a proximal surface, a distal surface, and a distal tip on and around which is provided an energy-abosrbing member having a three-dimensional, soft and porous structure, which has a compressive stress-strain behavior of a substantially lower order than that of the appositional jaw bone, which has an open pore size of 50 to 400 micro-millimeters, and which is permanently deformable under very light loads. In one embodiment of the dental implant, the energy-absorbing member extends distally from the shaft's tip. The member can be a soft, porous pad. In another embodiment, the shaft's distal region is also biocompatible, porous, soft, deformable, and tissue-ingrowth promoting. In a further embodiment, the shaft's surface is also substantially entirely biocompatible, porous, soft, deformable, and tissue-ingrowth promoting. In yet another embodiment, at least a portion of the shaft's proximal surface is also biocompatible, porous, deformable, and tissue-ingrowth promoting, while another portion of the proximal surface is biocompatible, porous, non-deformable and tissue-ingrowth promoting.

According to this invention the energy absorbing member eliminates or substantially reduces the bone's bone resorption; the combination of the soft porous pad and the sleeve serves to substantially absorb mechanical energy that is being transferred to and/or through the distal shaft and/or its tip, or at least largely attenuates the intensity of such load that do transfer to the apposite distal region of the bone. Such mechanical energy absorption or attenuation, in the region appositional to the tip of the shaft, prevents unnatural load shunting to and reduces localized stress zones in the distal bone. Such prevention allows the shaft's proximal region to maintain its load transfer capabilities, thereby ensuring osseous integrity of the proximal bone, all of which foster favourable conditions for long-term fixation of the proximal shaft.

The invention is further described in connection with accompanying drawings, wherein:
FIG. 1 is an elevational view, partly in section, of a known uncoated dental implant with a corrugated or threaded surface screwed into a threaded socket in the jaw, in which the bone under the shaft tip is nearly totally densified, and in which the bone resorption process has already well progressed;
FIG. 2 is an elevational view of an uncoated dental implant together with a simple embodiment of the invention, which includes a soft, porous, biocompatible member illustrated as a pad;
FIG. 3 is a perspective view of the pad shown in FIG. 2;
FIG. 4 is an elevational view of a dental implant whose shaft is coated with porous metal on its proximal surface, and which includes the pad of FIG. 3 and also a soft, porous, biocompatible distal sleeve or coating extending upwardly from the pad on the bare surface of the shaft;
FIG. 5 is an elevational view of a dental implant coated with discrete porous metal patches on the surface of its proximal shaft and which utilizes the pad shown in FIG. 3 and the sleeve shown in FIG. 4
FIG. 6 is a top view on line 6-6 of FIG. 5;
FIG. 7 is an elevational sectional view of a dental implant whose shaft is fully coated with a very soft porous layer, and which utilizes the pad below its shaft tip;
FIG. 8 is a sectional view on line 8-8 of FIG. 7;
FIG. 9 is an elevational view of a dental implant coated with discrete porous metal patches on the shaft's proximate surface; it also has a soft, porous, biocompatible sleeve or coating over the shaft's entire bare surface, and utilizes the pad of FIG. 3 below the shaft's tip;
FIG. 10 is a sectional view on line 10-10 of FIG. 9; and
FIG. 11 is a sectional view similar to FIG. 10, but showing the porous soft coating as being compressed by the wall of the socket.

To simplify the description, the invention will be described using the same numerals, whenever possible, to designate the same or similar parts.

The dental implants include a shaft 12 for insertion into the mandible 16 and/or maxilla. Only the mandible will be described hereinafter to further simplify the description.

The severe problems solved by the invention will become more apparent from a brief description of a known dental implant 10 (FIG. 1), shown in position within a preformed socket 21 within mandible 16. The shafts 12 are generally cylindrical in shape and have various lengths typically from 7mm to 18mm to accommodate individual anatomy.

Each shaft 12 receives a particular fixed or removable abutment attachment (not shown) to meet the anatomical limitation requirements of individual patients. All removable abutments are interchangeable on shaft 12. The abutments have inserts which are cemented or threaded into the shaft's axial bore 19 on threads 20 (FIGS. 6-8 and 10-11). Threaded inserts allow for a change of restoration type without disrupting the integrity of the dental implant itself.

Each insert may accept a viscoelastic intramobile element (not shown) which is intended to absorb and distribute stress, and which imitates the function of the missing tooth 8 (FIG. 1), periodontal ligament, and alveolar bone.

Shaft 12 (FIGS. 1-2) has a neck 11, a proximal exterior or outside region 13, a distal exterior or outside region 14, and a distal tip 15. Neck 11 has a top annular edge 15′.

As used herein in respect to shaft 12, "region" may be a three-dimensional locus of points which has depth. For example, shaft's distal region 14 can be a layer, a coating, or the shaft's exterior surface which can be smooth (FIG. 2) or it may have threads or corrugations 9 (FIG. 1).

If accurately fitted, shaft 12 can transfer appropriate stresses to mandible 16, which has a proximal region 17 and a distal region 18. The surgeon drills within the mandible a cylindrical socket 21, which has a proximal region 22 (FIG. 2) and a distal region 23. In an attempt to avoid intruding into viable bone, shaft 12 is shaped to seat centrally in socket 21.

If the shaft's exterior surface is threaded or corrugated then socket 21 is tapped to accommodate, in intimate contact, the corrugations or threads 9 (FIG. 1).

For use with uncoated implant 10, the surgeon uses precision tools for drilling and, in threaded implants, for tapping, a generally cylindrical socket 21 to conform as closely 'as possible to the shaft's geometrical shape. It is intended to obtain, intraoperatively, a generally uniform press fit between shaft 12 and the appositional mandible 16.

If a perfect press-fit is achieved, the prepared socket 21 will have, at each point over substantially its entire length, a transverse sectional area which corresponds substantially with the corresponding transverse sectional area of shaft 12 at that point.

An implant 10 which combines a uniform press-fit between proximal shaft 13 and appositional bone 16 can transfer loads to proximal bone 17 so as to develop strains therein that are similar to those imposed on normal teeth 8 within an intact mandible 16.

In response to loads, proximal shaft 13 distributes stresses to shaft's tip 15 longitudinally in the form of compressive stresses, and to proximal bone 17 in the form of lateral stresses. Distal shaft 14 and/or its tip 15 transfer corresponding stresses and strains to the apposite distal bone 18, which may respond to the received stresses by densifying its bone structure, and especially under shaft's tip 15.

Such densified bone 32 (FIG. 1) is believed to be prompted by relatively intense stresses which are transmitted, at least in part, through shaft tip 15 to the apposite bone. Such stresses are believed to be caused by axial forces acting about the axis of shaft 12 in response to normal mandibular movements .

Densified bone 32 has the necessary strength to fully react against the physiological mastication loads transmitted to and/or through shaft's tip 15.

The more reaction forces that are provided by more or less densified bone 32, the less reaction forces will be needed from proximal bone 17. This principle is known as "load shunting" from proximal bone 17 to distal bone 18.

It is believed that the transfer, by distal shaft 14 and/or shaft's tip 15, of stresses and strains to apposite bone 18, and the consequential formation of more or less densified bone 32, are the primary causes for the proximal, gradual, osseous resorption, generally designated as 33 (FIG. 1), which takes place within proximal bone 17 (FIG. 2).

As decalcification or osseous resorption 33 increases, proximal bone 17 becomes less and less able to resist the dangerous and increasing tendency of proximal shaft 13 to rotate within proximal socket 22, as well as the tendency by shaft tip 15 to toggle. All of which further prompts bone 16 to stimulate osseous production under shaft's tip 15, which further accelerates proximal osseous resorption already in progress until, sooner or later, a sufficient loosening of shaft 12 within its socket 21 takes place, which is accompanied by great pain and extraordinary discomfort to the patient.

The present invention has utility for uncoated dental implants, for dental implants whose shafts receive hard surface porosities, as well as those that receive soft surface porosities, and combinations thereof.

In order to eliminate or substantially reduce the bone's bone resorption, there is provided, in accordance with this invention, an energy absorbing member 34 (FIGS. 2-11) which is designed to substantially absorb mechanical energy that is being transferred to and/or through distal shaft 14 and/or its tip 15, or at least to largely attenuate the intensity of such loads that do transfer, to apposite distal region 18 of bone 16.

Implant 10 (FIGS. 1-3) has an uncoated shaft 12 which is associated, in accordance with a simple embodiment of this invention, with an energy-absorbing pad 35. It is shown disposed adjacent and opposite to shaft's tip 15. Preferably, pad 35 is bonded to shaft's tip 15.

Implant 10a (FIG. 4) has a proximal shaft region 13 which is coated with a continuous thin, hard, porous coating 26. In this embodiment of the invention, energy-absorbing member 34, in addition to pad 35, also includes a soft, porous, distal sleeve or coating 36 extending upwardly from and being continuous with pad 35. Coating 36 is applied to bare metal of shaft 12 in a suitable manner. Soft sleeve 36 is confined mainly to shaft's distal region 14.

Pad 35 and sleeve 36 serve to absorb or largely attenuate longitudinal, lateral, and rotational stresses and micromotions transferred to distal shaft 14 and especially its tip 15.

Such mechanical energy absorption or attenuation, in the region appositional to shaft's tip 15, prevents unnatural load shunting to, and reduces localized stress zones in, distal bone 18. Such prevention allows shaft's proximal region 13 to maintain its load transfer capabilities, thereby ensuring osseous integrity of proximal bone 17, all of which foster favorable conditions for long-term fixation of proximal shaft 13.

Implant 10b (FIGS. 5-6) has a proximal shaft region 13, which is coated with discrete, hard-porous patches 27, and a distal shaft region 14, which has pad 35 and sleeve 36.

It is intended that when proximal shaft 13 is inserted into proximal socket 22, a press-fit will form, at least between the hard coatings 26 or 27 and apposite proximal bone 17. To allow for a press-fit of soft coating 36, socket 21 is made to have, at each point adjacent to soft coating 36, a transverse sectional area which is slightly less than the corresponding transverse sectional area of soft coated shaft 12 at that point.

At the junction between hard and soft coatings on shaft 12 of implant 10a, soft-coated cross-sections will be larger than adjacent hard-coated cross-sections, so that following compression of soft coating 36, hard coating 26 will have a press-fit against proximal bone 17. Implant 10c (FIGS. 7-8) has a shaft 12 which is substantially-fully coated with a very soft, tissue-ingrowth promoting, very porous coating 28 over its entire bare outer surface. The shaft's distal region 14 of implant 10c receives pad 35 below shaft's tip 15.

Implant 10d (FIGS. 9-10) has discrete, hard-porous patches 38 on shaft's proximal region 13. The entire remainder of bare outer surface of shaft 12 is coated with a soft, porous coating 40. shaft's distal region 14 also receives pad 35 below shaft's tip 15.

To use implants 10c and 10d, the surgeon shapes socket 21 (FIGS. 1-2) to conform, as perfectly as possible, to the geometric shape of shaft 12. To allow for compression of soft coating 28 or soft coating 40, socket 21 is made to have, at each point over substantially its entire length, a transverse sectional area which is slightly less than the corresponding transverse sectional area of coated shaft 12 at that point.

The soft porous coating must compress, at least by a sufficient amount, so as to reduce the overall dimension of the coated shaft to that of the porous metal 27 (compare FIGS. 10 and 11).

When coated shaft 12 is forcefully inserted into socket 21, each soft porous coating 28, 36 or 40 becomes compressed (FIG. 11) and provides a desired press-fit, thereby achieving an optimal initial stability and an extensive surface contact area between the compressed porous coating and appositional bone 16.

A compression of the soft coating by about 1 to 40% will bring the hard-porous metal coating into apposition with adjacent bone, thereby maximizing the possibility of bone ingrowth into porous metal 27. At the same time, such biological bonding with hard coating will be augmented by fibrous tissue an/or bone ingrowth into the soft deformed coating.

The compression is preferably such that at least the sectional shape of coated proximal shaft 13, at any given point, is slightly larger than the corresponding medial-lateral dimension of proximal socket 22 at that point, whereby, when shaft 12 is inserted into socket 21, soft porous coating 28 or 40 becomes compressed between the core of shaft 12 and appositional bone 16, but without substantially restricting the porosity of coating 40.

The opportunity for tissue ingrowth into soft and hard coatings provides an optimal initial and a long-term stability, as well as a distributed, rather than a multi-point, biological fixation.

Implants 10 and 10a-10d are typically made of a strong, hard, biocompatible metal, such as stainless steel, cobalt-chrome, or titanium. They may also be made of a sufficiently-strong, composite, biocompatible structure of metal with polymers, or of wholly polymeric structures, which may be reinforced with metal or ceramic or other materials, such as polyimide fiber or carbon fiber. If shaft 12 is uncoated (FIG. 2), new bone will grow up and then interface and adapt to shaft 12.

The biocompatible hard, tissue-ingrowth promoting, surface porosities 26, 27 and 38 can be ceramic, polymeric, metallic or a composite material thereof. These surface porosities can be either wholly or partially of a homogeneous porous phase, or they can be combinations of different porous phases. They can be made of porous titanium or of other biocompatible metal, and such metal porosities can in turn be coated with synthetic hydroxylapatite to allow for a strong bond to form with appositional proximal bone 17 (FIG. 2).

A postoperative mechanical bond is formed between living bone and hard-porous coated surfaces. This bond is known as biointegration. The hard-porous coatings can also be designed to form a post operative, mechanical and biochemical bond with living bone. This bond is known as osseo-integration.

Hard porous coatings can be on the surface of proximal shaft 13 (FIG. 6), or they can be countersunk into the shaft's body (FIG. 10). The material out of which pad 35 and soft coatings 28, 36 and 40 are made should, preferably, have a three-dimensional structure, characterized by at least a low-modulus of elasticity, a continuous biocompatible solid phase, and a biocompatible fluid phase.

In the preferred embodiment, the fluid phase is continuous with the ambient environment. This preferential structure should exhibit a compressive stress-strain behavior of a substantially lower order than that of proximal bone 17. That is, this structure must deform under load much more readily than the appositional bone.

The material for pad 35 and for the soft coatings can have an open pore size of 0,05 to 0,4 micro-meters (50 to 400 micro-millimeters) which has been found to be optimal. A material that meets the above criteria can be elastomeric or nonelastomeric, resilient, open or closed pore, and very soft, so that sufficient deformation in its shape can occur in response to loading by distal shaft 14, as well as by any subsidence of shaft 12.

This soft porous material for pad 35 should become compressed in response to initial loading, but without substantially restricting its porosity, thereby permitting a subsequent compression to take place. Such a soft porous material will be nonstimulating to distal bone region 18.

The porosity of pad 35 will allow ingrowth therein of fibrous tissue, which will further enhance its ability to attenuate or absorb energy transferred to distal shaft 14.

Pad 35 has a porosity such that its volume can shrink up to 60-80% of its original volume before substantial resistance to compression becomes manifest.

Pad 35 (FIG. 2) can be a short cylinder having an outer diameter, which is slightly less than the smallest diameter of socket 21, in order to facilitate insertion of shaft 12 therein, or it can be slightly larger than the diameter of distal socket 23 to obtain a pressure fit with appositional bone 18.

It has been found that the thickness for the material from which pad 35 is made, between its interior surface apposite to shaft' tip 15 and its outside surface, should be greater than 0.5mm and, preferably, greater than 2mm and less than 4mm to provide adequate biomechanical energy absorption.

Where the hard coatings are located, the diametrical dimensions correspond to those of the opposite proximal bone socket 22.

The thickness of the resilient and deformable soft coatings may be such that the overall dimensions of the coated shaft will exceed the corresponding dimensions of prepared socket 21 by an amount ranging from 0.2% to 10%.

It has been found that the thickness for the material from which the soft coatings are made should be greater than .5mm and preferably greater than 1.5mm and less than 2.5mm.

The thickness of the soft coatings is such that they may be compressed by an amount ranging from one percent (1%) to forty percent (40%) of their original thickness without having their porosities overly reduced.

The material out of which pad 35 and soft coatings 28, 36 and 40 are made can be a porous Teflon perfluorocarbon polymer. Such materials, including tissue-ingrowth promoting additives, are sold by Novamed, Inc., Houston, Texas, USA, under the trademark PROPLAST.

A PROPLAST material is a reinforced polymer which comprises polytetrafluoroethylene fibers, in admixture with a proportion of carbon or graphite fiber or particles, or aluminum oxide particles and bonded with a sintered polytetrafluoroethylene resin. PROPLAST materials are soft, very porous, open pore, ingrowth-promoting, compressible, and permanently deformable under very light loads.

This invention fills the need for more natural stress and strain patterns within mandible 16 by optimizing the conditions for intimate engagement by shaft 12 with appositional bone. The invention allows for a more stable apposition of porous metal to adjacent bone, thereby achieving an improved distributed, longitudinal-load transfer to bone 16. The forces per unit of surface area become largely reduced.

By imposing at a suitable time, post operatively, a cyclic load on proximal bone 17, analogous to the load of a natural, unoperated mandible 16, proximal bone 17 responds and maintains maximal strength and resistance against swaying by shaft 12.

Thus, the surgeon can now select from a range of different dental implants including those which rely on an accurate press-fit to become established between an uncoated shaft and surrounding bone, and those which rely on tissue ingrowth into a porous coating on the shaft's outer surface. The surgeon can choose also from implants which are threaded, uncoated, or coated with a very-soft porous material, or coated with a hard-porous material, or with combinations thereof.

## Claims

1. A dental implant for insertion into a socket formed within the jaw bone of a patient, comprising an elongated shaft (12) insertable into the socket and defining a proximal region (13), a distal region (14), and a distal tip (15), and an energy-absorbing member (34) of biocompatible, porous and tissue-ingrowth promoting material extending axially from the distal tip (15) of the shaft (12) for contact with the appositional bone (16),
**characterized in** that
the member (34) has a three-dimensional, resilient, soft and porous structure, which structure has a compressive stress-strain behavior of a substantially lower order than that of the appositional jaw bone (16), has an open pore size of 0,05 to 0,4 micro-meters (50 to 400 micro-millimeters), is permanently deformable under very light loads, and has a porosity such that the volume of the member can shrink up to 60 to 80% of its original volume before substantial resistance to a compressive load becomes manifest.

2. A dental implant according to claim 1, characterized in that
the member (34) is in the form of a pad (35) attached to the tip (15) of the shaft (12).

3. A dental implant according to claim 1, characterized in that
the member (34) is integral with a sleeve of similar material mounted about the distal region (14) of the shaft (12) and extending over the distal tip (15).

4. A dental implant according to any one of claims 1 to 4, characterized in that
the member (34) has a thickness measured in the axial direction of the implant greater than 0.5mm but less than 4mm.

5. A dental implant according to any one of claims 1 to 4, characterized in that
the member (34) is constructed of a non-elastomeric material.

6. A dental implant according to any one of claims 1 to 4, characterized in that
the member (34) is constructed of a material comprising polytetra-fluoroethylene fibers, in admixture with carbon or graphite fiber or aluminium oxide bonded with a sintered polytetrafluoroethylene resin.

7. A dental implant according to any one of the preceding claims, characterized in that
at least one portion of the proximal region (13) of the shaft (12) is provided with a surface layer of biocompatible, porous, non-deformable and tissue-ingrowth promoting material (26, 36, 40).

8. A dental implant according to claim 7, characterized in that
at least one other portion of the proximal region (13) of the shaft (12) is provided with a surface layer of biocompatible, porous, deformable and tissue-ingrowth promoting material (28, 36, 40).

9. A dental implant according to any one of the preceding claims, characterized in that
at least a portion of the distal region (14) of the shaft (12) is provided with a surface layer of biocompatible, porous, soft, deformable and tissue-ingrowth promoting material (28, 36, 40).

10. A dental implant according to claim 7, characterized in that
the remainder (40) of the shaft (12), apart from said at least one portion, is provided with a surface layer of biocompatible, porous, soft, deformable and tissue-ingrowth promoting material.

11. A dental implant according to any one of claims 1-6, characterized in that
substantially the whole of the shaft (12) is provided with a surface layer of biocompatible, porous, soft and deformable material.

12. A dental implant according to any one of claims 7 to 11, characterized in that
said surface layer(s) have (has) a thickness less than 2.5mm.

13. A dental implant according to any one of claims 7 to 12, characterized in that
said surface layer(s) can be compressed by an amount ranging from one percent (1%) to forty percent (40%) of their (its) original thickness.

14. A dental implant according to any one of claims 7 to 13, characterized in that
said surface layer(s) have (has) an open pore size of 50 to 400 micro-millimeters.

## Patentansprüche

1. Dentalimplantat zum Einsetzen in einen Sockel, der innerhalb des Backenknochens eines Patienten ausgebildet ist, mit einem länglichen Schaft (12), der in den Sockel einsetzbar ist und der einen proximalen Bereich (13), einen distalen Bereich (14) und eine distale Spitze (15) festlegt, und mit einem Energie absorbierenden Bauteil (34) aus biokompatiblem, porösem und das Einwachsen in das Gewebe förderndem Material, das sich in axialer Richtung von der distalen Spitze (15) des Schaftes (12) aus in Kontakt mit dem appositionalen Knochen (16) erstreckt,
**dadurch gekennzeichnet**, daß
das Bauteil (34) eine dreidimensionale, nachgiebige, weiche und poröse Struktur hat, die ein Druckkraft-Dehnungsverhalten in einer wesentlich niedrigeren Größenordnung als das des appositionalen Backenknochens (16) besitzt, eine Größe der offenen Poren von 0,05 - 0,4 Mikrometer (50 - 400 Mikromillimeter) hat, unter sehr geringen Lastbeanspruchungen dauerhaft deformierbar ist, und eine Porosität aufweist, die so beschaffen ist, daß das Volumen des Bauteiles um bis zu 60 - 80% des ursprünglichen Volumens schrumpfen kann, bevor ein wesentlicher Widerstand gegen Druckbelastung auftritt.

2. Dentalimplantat nach Anspruch 1, dadurch gekennzeichnet, daß das Bauteil (34) in Form eines Puffers (35) ausgebildet ist, der mit der Spitze (15) des Schaftes (12) verbunden ist.

3. Dentalimplantat nach Anspruch 1, dadurch gekennzeichnet, daß das Bauteil (34) integral mit einer Hülse aus ähnlichem Material ausgebildet ist, das am distalen Bereich (14) des Schaftes (12) befestigt ist und sich über die distale Spitze (15) erstreckt.

4. Dentalimplantat nach einem der Ansprüche 1 - 3, dadurch gekennzeichnet, daß das Bauteil (34) eine Dicke aufweist, die gemessen in der axialen Richtung des Implantats größer als 0,5 mm, jedoch kleiner als 4 mm ist.

5. Dentalimplantat nach einem der Ansprüche 1 - 4, dadurch gekennzeichnet, daß das Bauteil (34) aus einem nichtelastomeren Material hergestellt ist.

6. Dentalimplantat nach einem der Ansprüche 1 - 4, dadurch gekennzeichnet, daß das Bauteil (34) aus einem Material hergestellt ist, das Polytetrafluoräthylenfasern, gemischt mit Kohlenstoff- oder Graphitfasern oder Aluminiumoxid verbunden mit einem gesinterten Polytetrafluoräthylenharz enthält.

7. Dentalimplantat nach einem der vorausgehenden Ansprüche, dadurch gekennzeichnet, daß mindestens ein Teil des proximalen Bereiches (13) des Schaftes (12) mit einer Oberflächenschicht aus biokompatiblem, porösem, nicht deformierbarem und das Einwachsen in Gewebe förderndem Material (26, 36, 40) versehen ist.

8. Dentalimplantat nach Anspruch 7, dadurch gekennzeichnet, daß mindestens ein anderer Teil des proximalen Bereiches (13) des Schaftes (12) mit einer Oberflächenschicht aus biokompatiblem, porösem, deformierbarem und das Einwachsen in Gewebe förderndem Material (28, 36, 40) versehen ist.

9. Dentalimplantat nach einem der vorausgehenden Ansprüche, dadurch gekennzeichnet, daß mindestens ein Teil des distalen Bereiches (14) des Schaftes (12) mit einer Oberflächenschicht aus biokompatiblem, porösem, weichem, deformierbarem und das Einwachsen in Gewebe förderndem Material (28, 36, 40) versehen ist.

10. Dentalimplantat nach Anspruch 7, dadurch gekennzeichnet, daß der übrige Teil (40) des Schaftes (12) abgesehen von dem mindestens einen Teil mit einer Oberflächenschicht aus biokompatiblem, porösem, weichem, deformierbarem und das Einwachsen in Gewebe förderndem Material versehen ist.

11. Dentalimplantat nach einem der Ansprüche 1 - 6, dadurch gekennzeichnet, daß im wesentlichen der gesamte Schaft (12) mit einer Oberflächenschicht aus biokompatiblem, porösem, weichem und deformierbarem Material versehen ist.

12. Dentalimplantat nach einem der Ansprüche 7 - 11, dadurch gekennzeichnet, daß die Oberflächenschicht(en) eine Dicke kleiner als 2,5 mm hat (haben).

13. Dentalimplantat nach einem der Ansprüche 7 - 12, dadurch gekennzeichnet, daß die Oberflächenschicht(en) um einen Betrag komprimierbar ist (sind), der von einem Prozent (1%) bis vierzig Prozent (40%) der ursprünglichen Dicke reicht.

14. Dentalimplantat nach einem der Ansprüche 7 - 13, dadurch gekennzeichnet, daß die Oberflächenschicht(en) eine offene Porengröße von 50 - 400 Mikromillimeter hat (haben).

## Revendications

1. Implant dentaire pour l'insertion dans une cavité formée à l'intérieur de l'os de la mâchoire d'un patient, comprenant un axe allongé (12) pouvant être inséré dans la cavité et définissant une région proximale (13), une région distale (14), et une extrémité distale (15), et un élément absorbeur d'énergie (34) en une matière biocompatible, poreuse et favorisant la croissance des tissus, s'étendant axialement à partir de l'extrémité distale (15) de l'axe (12) pour venir en contact avec l'os juxtaposé (16),
caractérisé en ce que
l'élément (34) présente une structure tridimensionnelle, élastique, molle et poreuse, laquelle structure a un comportement compressif de compression-déformation d'un ordre sensiblement plus faible que l'os de la mâchoire juxtaposé (16), a une taille de pores ouverts de 0,05 à 0,4 micromètres (50 à 400 micro-millimètres), se déforme de façon permanente sous des charges très légères et présente une porosité telle que le volume de l'élément peut diminuer d'une valeur pouvant atteindre 60 à 80 % de son volume d'origine avant qu'une résistance sensible à une charge de compression devienne manifeste.

2. Implant dentaire selon la revendication 1, caractérisé en ce que
l'élément (34) est réalisé sous la forme d'une pastille (35) fixée à l'extrémité (15) de l'axe (12).

3. Implant dentaire selon la revendication 1, caractérisé en ce que
l'élément (34) fait corps avec un manchon d'une matière similaire monté sur la région distale (14) de l'axe (12) et s'étendant au-dessus de l'extrémité distale (15).

4. Implant dentaire selon l'une quelconque des revendications 1 à 3, caractérisé en ce que
l'élément (34) a une épaisseur mesurée dans la direction axiale de l'implant supérieure à 0,5 mm mais inférieure à 4 mm.

5. Implant dentaire selon l'une quelconque des revendications 1 à 4, caractérisé en ce que
l'élément (34) est constitué d'une matière non élastomère.

6. Implant dentaire selon l'une quelconque des revendications 1 à 4, caractérisé en ce que
l'élément (34) est constitué d'une matière comprenant des fibres de polytétrafluoroéthylène mélangées à de la fibre de carbone ou de graphite ou de l'oxyde d'aluminium combiné à une résine de polytétrafluoroéthylène fritté.

7. Implant dentaire selon l'une quelconque des revendications précédentes, caractérisé en ce qu'
au moins une partie de la région proximale (13) de l'axe (12) est garnie d'une couche de surface de matière biocompatible, poreuse, non déformable et favorisant la croissance des tissus (26, 36, 40).

8. Implant dentaire selon la revendication 7, caractérisé en ce qu'
au moins une autre partie de la région proximale (13) de l'axe (12) est garnie d'une couche de surface de matière biocompatible, poreuse, déformable et favorisant la croissance des tissus (28, 36, 40).

9. Implant dentaire selon l'une quelconque des revendications précédents, caractérisé en ce qu'
au moins une partie de la région distale (14) de l'axe (12) est garnie d'une couche de surface de matière biocompatible, poreuse, molle, déformable et favorisant la croissance des tissus (28, 36, 40).

10. Implant dentaire selon la revendication 7, caractérisé en ce que
le reste (40) de l'axe (12), excepté ladite au moins une partie, est garni d'une couche de surface d'une matière biocompatible, poreuse, molle, déformable et favorisant la croissance des tissus.

11. Implant dentaire selon l'une quelconque des revendications 1 à 6, caractérisé en ce que
sensiblement l'intégralité de l'axe (12) est garnie d'une couche de surface d'une matière biocompatible, poreuse, molle, déformable.

12. Implant dentaire selon l'une quelconque des revendications 7 à 11, caractérisé en ce que
ladite (lesdites) couche(s) de surface a (ont) une épaisseur inférieure à 2,5 mm.

13. Implant dentaire selon l'une quelconque des revendications 7 à 12, caractérisé en ce que
ladite (lesdites) couche(s) de surface peut (peuvent) être comprimée(s) d'une quantité comprise entre un pour cent (1%) et quarante pour cent (40%) de son (leur) épaisseur d'origine.

14. Implant dentaire selon l'une quelconque des revendications 7 à 13, caractérisé en ce que
ladite (lesdites) couches(s) de surface a (ont) une taille de pores ouverts de 50 à 400 micro-millimètres.
